# EUROPEAN PATENT SPECIFICATION

(11) **EP 2 855 362 B1**
(45) Date of publication and mention of the grant of the patent: **13.06.2018**
(21) Application number: 13729517.6
(22) Date of filing: 29.05.2013
(51) Int. Cl.: C02F 1/00, E03B 7/07, E03F 5/00, E03F 5/14

(54) **WASTE WATER TREATMENT SYSTEM; WASTE WATER TREATMENT PLANT; OPERATION METHOD**
ABWASSERBEHANDLUNGSSYSTEM; KLÄRANLAGE; BETRIEBSVERFAHREN
SYSTÈME DE TRAITEMENT D'EAUX USÉES ; INSTALLATION DE TRAITEMENT D'EAUX USÉES ; PROCÉDÉ DE FONCTIONNEMENT

(30) Priority: 30.05.2012 NL 2008904
(43) Date of publication of application: 08.04.2015
(73) Proprietor: Waterschapsbedrijf Limburg, 6043 CX Roermond (NL)
(72) Inventor: JANSSEN, Johannes Petrus Maria, NL-6040 KH Roermond (NL)
(74) Representative: V.O.
(86) International application number: PCT/NL2013/050388
(87) International publication number: WO 2013/180566

(56) References cited:
- US-A- 4 279 753
- US-A1- 2005 087 446
- US-A1- 2010 292 844
- US-A1- 2011 186 495

## Description

The invention relates to a system for treatment of waste water.

Such systems are known and are usually part of a waste water treatment plant. In a waste water treatment plant, waste water is at least partly treated. Typically, the waste water is treated such that it fulfils regulatory and/or other requirements. The at least partly treated waste water can then be used in other applications and/or can be fed back to the environment.

For example, document US 2011/186495 discloses an apparatus for water treatment using sidestream injection for injection of an oxidant in the water flow. Also, a mixing device for mixing of the injected oxidant with the influent water is provided.

Document US 4 279 753 discloses a method and apparatus for the treatment of industrial or municipal wastewater including multiple series of alternating aerobic-anaerobic bioreactors in series.

Document US 2010/292844 shows an automated water treatment system and methods for treating raw water to produce potable water. The system has several selectable treatment subsystems and a controller which automatically selects and controls the mode of operation and the flow of water through a treatment path to bypass the water treatment subsystems that are not needed to produce potable water. The system is configured to fit inside a standard-sized commercial shipping container for transport and during operation.

Document US 2005/087446 describes an electrode-ionization channel element comprising supports for forming a water treatment unit. Various channel elements can be connected with each other via the supports.

A known waste water treatment plant usually is provided with a first train, also called the front train, in which the waste water is treated mechanically. Filters are provided to filter the incoming waste water, also called influent, and sand separator are provided to remove sand from the waste water. When the waste water leaves the front train, it goes to the second train where bacterial treatment takes place.

The influent usually arrives in a large bunker-type housing in which a first row of filters are provided over approximately the full width of the entrance, typically several meters. These filters provide for a first filtering of the influent, large solid contaminations are left behind the first row of filters. Sometimes a second row of filters with a smaller grid may be provided. After filtering and/or inbetween filtering, the waste water is guided towards a large basin in which the stream velocity significantly decreases. Due to the decrease of the stream velocity, sand particles fall to the bottom of the basin and may be removed from the waste water. The thus treated waste water is then guided towards the bacterial treatment train.

Furthermore, part of the waste water treatment plant is built underneath the bottom. Both the front train as at least part of the second train with the bacteriological treatment extend partly underneath the ground level.

This configuration, of at least the front train, results in a relatively large construction area for a waste water plant. It also may make the waste water plant relatively difficult to design and/or construct and/or change since complex concrete constructions, which are partly underneath the ground level, may be required. Also, when one of the filters may be damaged, in fact the supply of at least a part of the waste water is to be temporarily stopped for repairing the filter. This requires temporary measures to bypass at least part of the waste water treatment system, at least of the front train, which is relatively costly.

A typical waste water treatment plant is designed with a particular amount of waste water supply, e.g. a supply of 1000 m³/hour or of 5000 m³/hour or any other supply quantity depending on the demographical and geographical characteristics of the area to be served for - usually - the next 20 to 30 years. This makes it difficult, albeit impossible, to anticipate and/or to react on demographical and/or geographical and/or regulatory changes over time. Also, each waste water treatment plant is individually and specifically designed and built for a specific situation, with a predetermined amount of waste water supply, for a predetermined number of years, etc., resulting in a design and built time of approximately two to three years. This makes it difficult, practically impossible, to change the waste water treatment plant due to varying circumstances.

It is clear that there is a need for a system for waste water treatment that obviates at least one of the above mentioned drawbacks. In particular, there is a need for a system for waste water treatment relating to the front train of mechanical treatment that allows a reduced time for designing and building and/or that may allow anticipation and/or reaction on varying external circumstances.

Thereto, the invention provides for a system for treatment of waste water comprising a waste water channel provided with a supply opening for receiving a waste water stream and a discharge opening for discharging an at least partly treated waste water stream, wherein the waste water channel is provided with at least a set of a first channel coupling element and a second channel coupling element, further comprising a box element in which at least one waste water treatment instrument is present, wherein the box element is provided with a first box coupling element and a second box coupling element that are arranged for coupling with the first channel coupling element and the second channel coupling element respectively for creating at least a first fluid passage from the waste water channel to the box element such that at least a part of the waste water stream is guided through the box element to be at least partly in contact with the waste water treatment instrument.

By providing a waste water channel with at least a set of first and second channel coupling elements, there is a central channel provided through which the waste water flows.

In the box element a waste water treatment instrument is present, such as a filter or a sand separator. The filter can be a known grid type filter for filtering relatively large contaminations. The sand separator can be a known separator or clarifier, such as a cyclone separator or any other type of sand separator. The waste water treatment instruments can be conventional waste water treatment instruments that are placed in a box element or the waste water treatment instrument can be a specially instrument for placement in the box element.

In the context of this description, a box element is understood to be a box shaped element or a box in which at least one waste water treatment instrument is arranged. The one or more waste water treatment instrument may itself not be box shaped and/or may have its specific shape corresponding with its function, e.g. the cyclonic shape of a cyclone separator. It is the waste water treatment instrument that is arranged inside the box shaped element. By providing a box element in which a waste water treatment instrument is arranged, the external dimensions of each box element may be similar as to provide a modular system. Instead of adding or removing an individual waste water treatment instrument, which it specific dimensions, shapes, couplings etc. the waste water treatment instrument is arranged in the box element. Each box element has similar and/or corresponding dimensions and/or similar and/or corresponding box coupling elements, providing for more flexibility and/or modularity and/or reduced maintenance and/or construction time, etc.

The box element is further provided with a first box coupling element and a second box coupling element. The first box coupling element is arranged to couple with the first channel coupling element such that after coupling a first fluid passage is established between the channel and the box element. The second box coupling element is arranged to couple with the second channel coupling element such that after coupling a second fluid passage is established between the box element and the channel or between the box element and another box element or between the box element and a discharge pipe. The second fluid passage may have various possibilities, depending on whether or not a part of the waste water is to be fed back to the channel or to another box element or to another discharge pipe or to an assembly basin etc. The second fluid passage thus may open towards the channel or towards an other discharge element.

When the box element is coupled to the waste water channel, at least part of the waste water stream is guided through the box element to come in contact with the waste water treatment instrument housed in the box element.

By providing a waste channel with at least a set of first and second channel coupling element, preferably also a further set is provided, the front train of the waste water treatment plant can be arranged modular. The channel is then provided as a central structure to which 'modules' as box elements can be connected. The modules as box elements can be connected to the waste water channel depending on the actual needs. A single box element can be considered as a module connectable to the central waste water channel of the modular waste water treatment system.

For example, for an emerging area, in the beginning of the operation period of the waste water treatment plant, two box elements can be connected to the central channel, e.g. a box element containing a filter, and a box element containing a sand separator. After a few years of operation, when the amount of supplied waste water increases, additional box elements can be connected to a set of first and second channel coupling elements to provide for sufficient treatment of the waste water. Similarly, in an area with a decreasing demographic context, the amount of waste water to be supplied to the waste water treatment plant may decrease, so the waste water treatment plant may require downscaling during its operational life time. This can be reached by removing a box element from the waste water channel after a few years of operation. When removing the box element, the first and second channel coupling elements close again.

This modular waste water treatment system allows for a shorter design, development and construction time compared to a conventional waste water treatment system. The channel can be of relatively simple design and construction, while the box elements can be manufactured and/or maintained in a controlled environment, such as a manufacturing hall or a factory, and can thereafter be transported to the site where the waste water treatment system is being built. The box element can relatively easily be coupled to the central channel to obtain a fluid passage. Advantageously, the box element is fully tested, pre-set, etc. in the factory such that the box element can relatively simply be connected to the channel with the so-called "plug-and-play" principle.

When developing a waste water treatment system, preferably only a limited number of types of box elements are available. For example, there is a type I box element with a filter type I and a type II box element with a filter type II and a type III box element with a filter type III as well as a type IV box element with a sand separator. The filters can be conventional filters each having a different hydraulic performance. Typically, the hydraulic performance in m³/min is determined by the grid of the filter. By combining these available box elements to the channel until the required treatment of the waste water is obtained, the waste water treatment system can be relatively fast, simple and cost effectively be developed.

Further, by providing a modular waste water treatment system with a central channel and modules of box elements, the waste water treatment system can be easily scaled whether up to a higher capacity or down to a lower capacity by adding or removing box elements respectively. This allows a more flexible and scalable operation of the waste water treatment system.

Also, in case of a damaged or broken waste water instrument, the box element containing the damaged instrument can be removed from the central channel and can be replaced by another box element, e.g. a spare box element containing a functioning waste water treatment instrument. Using the box elements may also reduce the downtime due to maintenance. The box element that needs regular maintenance may be removed from the waste water channel and may be replaced by another, new or already revised, box element. The removed box element can then be maintained in controlled circumstances e.g. in a workshop instead of on site. This may reduce operational costs, since less downtime may be possible.

The box element preferably contains a single waste water treatment instrument, but may of course, depending on the requirements, contain multiple waste water treatment instruments. Preferably, the box element has a housing in which the waste water treatment instrument is positioned. In the box element itself, a flow path is arranged between the first box coupling element and the second coupling element to allow waste water to pass from the first box coupling element to the second box coupling element when connected to the waste water channel. In the flow path and/or along the flow path, the waste water instrument can be arranged to treat at least a part of the waste water flowing through the box element.

Advantageously, the housing of the box element is provided with the first box coupling element and the second box coupling element. The first box coupling element is arranged for coupling with the first channel coupling element and the second box coupling element is arranged for coupling with the second channel coupling element.

In an advantageous embodiment, the sets of a first channel coupling element and a second channel coupling element with which the central waste water channel is provided are similar, meaning that each set has the same or similar first channel coupling element and has the same or similar second channel coupling element. This allows optimal use of the modular principle when connecting 'modules' of box elements to the waste water channel, since each box element then can be provided with a similar set of a first and second box coupling element. Preferably, the first channel coupling elements have the same or similar sizes and structure and the second channel coupling elements have the same or similar sizes and structures. More preferably, the first channel coupling elements may be the same or similar as the second channel coupling elements.

When the sets of first channel coupling element and second channel coupling element are similar, the box elements can be equipped with a similar set of a first box coupling element and a second box coupling element. This may significantly decrease costs for designing and/or building and/or operating and/or maintaining the waste water treatment system, since a single type of first channel coupling elements can be provided, as well as a single type of second channel coupling elements can be provided, as well as a single type of first box coupling elements that is connectable with the first channel coupling element and a single type of second box coupling element can be provided that is connectable with the second channel coupling element.

In addition, the distance between the first channel coupling element and the second channel coupling element can be the same or similar for each set of first and second channel coupling element. This allows more uniformity between the sets of first and second channel coupling elements, as well as between the sets of first and second box coupling elements. Since also the first and second box coupling elements can be arranged having the same or similar distance between them as the first and second channel coupling elements.

Furthermore, the box elements may have similar external shape and dimensions, and preferably, have a similar housing in which similar first and second box coupling elements are provided. Advantageously, the box elements are transportable over at least the road, such that the box elements can be manufactured and approximately fully equipped off site in a factory or assembly hall, and can thereafter be transported to the site. Once on site, the box element preferably only has to be connected to the waste water channel by coupling the first and second box coupling elements to the first and second channel coupling elements to establish a fluid passage. In an advantageous embodiment, the housing of the box element can be provided as a ISO normalized container. However, also other dimensions and shapes of a housing are possible.

A guide arrangement may be provided next to the waste water channel on which the box element can be positioned and guided to/from the waste water channel. Advantageously, the guide arrangement, such as rails, is arranged to position the box element optimally with respect to the channel. When the box element is guided towards the waste water channel, the first and second box coupling elements are preferably optimally positioned with respect to the first and second channel coupling elements, such that the first and second box coupling elements can be easily coupled to the first and second channel coupling elements.

By providing standard components, such as the same or similar first channel coupling elements, the same or similar second channel coupling elements, the same or similar first box coupling elements, the same or similar second box coupling elements, the same or similar housings and/or frames for the box element, etc. a further reduction in design and construction time and costs as well as a further reduction in operational costs and maintenance costs may be possible. By using such standard components, less spare parts may be required and also maintenance may become more efficient since the same standard components have to be maintained, which can also relatively easily be replaced. Also inspecting, monitoring, controlling etc. of the same or similar components may induce cost savings.

In an advantageous embodiment, the first and second channel coupling elements are adjustable between a closed position in which they substantially close a first opening and a second opening respectively in the waste water channel wall and an open position in which the first and second opening is substantially open to allow fluid passage. By providing the first and second channel coupling elements as adjustable elements, they can for example be operated by the first and second box coupling elements. Preferably, the first and second channel coupling elements provide for a fluid tight closure of the channel wall when in the closed position.

For example, the box coupling elements may push the first and second channel coupling elements towards the open position. Then, the box element can be relatively easily coupled to the waste water channel when the box coupling elements can relatively simple connect to the channel coupling elements by adjusting the channel coupling elements to the open position. In that case, the box coupling element may for example be connected when the waste water channel is in operation and waste water flows through it.

However, it may also be possible to connect the box element to the waste water channel by removing the first and second channel coupling elements to create a first and second opening and to connect the first and second box coupling elements in the first and second opening respectively. In that case, the waste water in the channel may be temporarily made fluid free by arranging a barrier in the channel over the first and second channel coupling elements. Such a barrier may also have uniform and/or standard size and/or dimensions to cover the uniform and/or standard set of first and second channel coupling elements.

The waste water channel advantageously has a declining position, wherein the supply opening is positioned higher than the discharge opening. Then, for transport of the waste water stream through the waste water channel, gravity can be used. Only power may be required to bring the waste water to the height of the supply opening by means of pumps or screw transporter, also called Archimedes transporter.

In an advantageous embodiment, the waste water channel is built up of similar segments of approximately the same dimensions and/or length. This may in addition decrease the design and construction time of the waste water system. The segments of the channel can then be manufactured in a controlled environment such as a factory. The quality of the segments may therefore be relatively high. Then, the segments can be transported to the site where they can be assembled to a channel. The segments may be manufactured with a set of first and second openings. Also, in the factory the first and second channel coupling elements may already be assembled in the first and second openings. The channel segments may further be provided with connection means for connection with adjacent channel segments. This way, the channel can be manufactured and assembled relatively cost effectively. The channel may be an open channel, or may be a closed channel, such as a pipe. Also, an open channel may be provided with cover plates that cover the open channel, for example when covering of the open channel may be required due to smell nuisance. The sets of first and second channel coupling elements may be provided at one side of the channel or may be provided at both sides of the channel.

Further, to facilitate guiding at least a part of the waste water to a first opening when coupled to a box element a barrier may be provided in the channel between the first channel coupling element and the second channel coupling element. Advantageously, the barrier is removable and is only present in the channel when the box element is coupled to the first and second channel coupling elements. The barrier may be erected automatically when the box element is coupled to the channel, or the barrier may be pushed into the channel by the box element when coupling it to the channel. Many variants are possible.

Further advantageous embodiments are in the subclaims.

The invention also relates to a waste water channel, a box element and a waste water treatment plant, and to a method for operating a waste water treatment system.

The invention will further be elucidated on the basis of exemplary embodiments which are represented in the drawings. The exemplary embodiments are given by way of non-limitative illustration of the invention.

In the drawings:
Fig. 1 shows a schematic top view of a first embodiment of a waste water system according to the invention;
Fig. 2 shows a schematic top view of a second embodiment of a waste water system according to the invention; and
Fig. 3 shows a schematic perspective view of a waste water plant comprising the waste water system of Fig. 2.

It is noted that the figures are only schematic representations of embodiments of the invention that are given by way of non-limited example. In the figures, the same or corresponding parts are designated with the same reference numerals. The drawings are not to scale and cannot be used to derive dimensions and/or proportions.

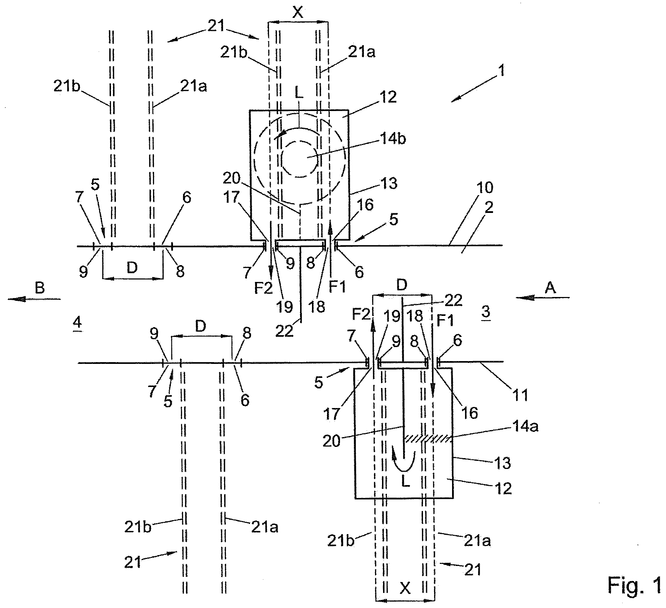

Figure 1 shows a schematic top view of a system 1 for treatment of waste water. The system 1 usually forms part of a waste water plant and provides for mechanical treatment of waste water, as opposed to bacteriological treatment of waste water. The mechanical treatment may also be called the front train of the waste water plant.

The system 1 comprises a waste water channel 2 having a supply opening 3 for receiving a waste water stream and a discharge opening 4 for discharging an at least partly treated waste water stream. The waste water supply stream, or influent, is represented by arrow A and the waste water discharge stream is represented by arrow B.

The waste water channel 2 is provided with a number of sets 5 comprising a first channel coupling element 6 and a second channel coupling element 7. The second channel coupling element 7 is positioned more downstream than the first channel coupling element 6. The first and the second channel coupling elements 6, 7 are represented schematically in Figure 1, but can be a hatch or a lid or a shutter or any other component. The first and second channel coupling elements 6, 7 can be removable and/or adjustable between a closed position in which the channel coupling elements 6, 7 close off a first and second opening 8, 9 respectively in the waste water channel wall 10, 11. By removing and/or adjusting the first and second channel coupling elements 6, 7 to an open position, the openings 8, 9 are opened so waste water can pass through the first opening 8 and the second opening 9.

Preferably, all provided first channel elements 6 are identical and all provided second channel elements 7 are identical. By providing for each set 5 the same first channel coupling element 6 and the same second channel coupling element 7, the variety of components needed for constructing the waste water treatment system 1 may be reduced. This may reduce the development and/or construction time, as well as construction costs and maintenance costs.

In addition, the distance D between the first channel coupling element 6 and the second channel coupling element 7 is the same or similar for each set of first and second channel coupling elements 6, 7.

In this embodiment, the waste water channel 2 is provided with four sets 5 of first and second channel coupling elements 6, 7, but more or less sets 5 may be provided. Also, in this embodiment, both channel walls 10, 11 are provided with the first and second channel coupling elements 6, 7. However, in another embodiment only channel side wall 10 or channel side wall 11 may be provided with the sets 5, or the sets 5 may be provided in a bottom or a top wall of the channel 2. The channel 2 may be an open channel, of which the top part may be open, or may be a closed channel, arranged as a pipe.

Further, the waste water treatment system 1 comprises box elements 12. In the embodiment of Figure 1, two box elements 12 are shown.

The box element 12 preferably comprises a housing or a frame 13. In the housing or frame 13, a waste water treatment instrument 14 is arranged. The waste water treatment instrument 14 can be a filter 14a or a sand separator 14b. The waste water treatment instruments 14 can be conventional, well known, waste water treatment instruments.

The box element 12 is further provided with a first box coupling element 16 and a second box coupling element 17. The first and second box coupling elements 16, 17 are arranged for coupling with the first and second channel coupling elements 6, 7 respectively to obtain a first fluid passage 18 and a second fluid passage 19 respectively through the channel wall 10, 11. Advantageously, the distance between the first and second box coupling elements 16, 17 have a distance X that is the same or similar as the distance D between the first and second channel coupling elements 6, 7, which facilitates coupling of the box element 12 to the set of first and second channel coupling elements 6, 7.

The first and second box coupling elements 16, 17 are here schematically represented but can be any coupling element that cooperates with a corresponding channel coupling element. For example, the box coupling element can be a protruding tube that may push a lid or a hatch as channel coupling element open upon connecting so the fluid passage can be obtained. Many variants can be possible. It may be possible to couple the box coupling elements to the channel coupling elements during operation of the channel, i.e. while the waste water flows through the channel. It may be possible to couple the box coupling elements to the channel coupling elements when at least the channel coupling elements are kept dry. For example, during operation of the waste water channel, a dam may be provided over the first and second channel coupling elements 6, 7 to keep them dry during coupling with the box coupling elements 16, 17.

Once the box coupling elements 16, 17 are connected with the channel coupling elements 6, 7 and a first fluid passage 18 and a second fluid passage 19 has been obtained, at least part of the waste water flows through the box element 12. A part of the waste water stream flows through the first passage 18 denoted with arrow F1 and is discharged from the box element 12 via the second fluid passage 19 denoted with arrow F2.

In the box element 12, waste water follows a fluid path L. The box element 12 may be at least partly divided with a partition 20 to provide for a fluid path L from the first passage 18 to the second passage 19. In the fluid path L, the waste water treatment instrument 14 is arranged. In one embodiment, a filter 14a is arranged in the fluid path L such that waste water passing through the first passage 18 into the box element 12 also passes the filter 14a and is thereafter discharged from the box element 12 via the second fluid passage 19. In another embodiment, a sand separator 14b, e.g. a cyclonic sand separator, is positioned in the fluid path L such that waste water entering the box element 12 via the first fluid passage 18 also passes through the sand separator 14b and is thereafter discharged from the box element 12 via the second fluid passage 19.

To guide at least a part of the waste water towards the first fluid passage 18 when the box element 12 is coupled, a barrier 22 can be provided in the waste water channel 2. The barrier 22 may block passage of the waste water stream over at least part of the width and/or height of the waste water channel 2. The barrier 22 may be fixedly arranged and thus may be always present, or may be adjustable, i.e. the barrier 22 may arise only when the box element 12 is coupled and the first and second fluid passages 18, 19 are open. For example, during coupling of the box element 12 with the channel 2, one may think of the box element 12 pushing the barrier into the waste water channel 2 the same time it couples with the first and second channel coupling elements 6, 7. Many variants of the barrier 22 are possible, and there are many possibilities of making the barrier 22 adjustable between a position in which it is outside the channel 2 and a position in which it is inside the channel 2 when the box element 12 is coupled to the channel 2.

Preferably, all first box coupling elements 16 are identical and are arranged to couple with the first channel coupling elements 6. All second box coupling elements 17 are preferably identical and are arranged to coupling with the second channel coupling elements 7, to allow relatively easily coupling and/or decoupling, as well as relatively easy maintenance and repair. Further, by providing as much as possible the same, identical or similar components, storage and spare part costs may be reduced, as well as construction, maintenance and/or repair costs can become lower.

The box elements 12 preferably all have the same or similar external dimensions. For example, a filter 14a is preferably provided inside a housing 13, while a cyclonic sand separator 14b can be provided as mounted to an external frame 13. By providing all box elements 12 with the same or similar external dimensions they can be interchangeable, while in addition transport, storage and/or maintenance can become more easy. Advantageously, the housing and/or the frame have the dimensions of a standardized container, such as an ISO standardized container that is suitable for road transport.

By providing the box elements 12, they can be fully equipped in a controlled environment such as a factory and can then be transported to the construction site to be coupled to the waste water channel 2. Also, testing of the box element 12 and its equipment can be done in the controlled environment such that the box element 12 is ready to be installed when leaving the factory. The box element 12 can then be transported to the site, be installed to the channel 3 after which operation can start. By fully testing and controlling the box element 12 at the factory, it can be ready for use and the box element 12 can be installed with the so-called "plug-and-play" principle.

In Figure 1 it can be seen that two sets 5 of first and second channel coupling elements 6, 7 are unoccupied while two sets 5 are occupied with box elements 12.

Also in Figure 1 it can be seen that there is a guide arrangement 21 provided. The guide arrangement 21 here comprises two rails 21a, 21b transverse oriented with respect to the waste water channel 2. A box element 12 is movable over the rails 21a, 21b to and/or from the waste water channel 2. By moving the box element 12 over the rails 21a, 21b, the first and second box coupling elements 16, 17 can be optimally aligned to couple with the first and second channel coupling elements 6, 7. So an optimal and relatively fast coupling of the box element 12 to the waste water channel 2 can be obtained.

The box elements 12 can be considered as the modules of a modular waste water treatment system. Depending on the requirements and/or needs, more or less modules can be coupled to and/or decoupled from the channel 2, thus a modular system can be obtained. At the beginning of the operation of the waste water system 1, a number of modules or box elements 12 can be coupled to the waste water channel 2. During operation, due to changing regulatory requirements, or due to varying demographic or geographic circumstance of the area to be served, more or less waste water can be offered or more or less treatment may be required. Therefore, during operation of the waste water system 1, the number of modules or box elements 12 may be adjusted by coupling additional modules or box elements 12 to the channel 2 or decoupling modules or box elements 12 from the channel 2. The waste water treatment system 1 can thus be relatively easily scaled.

Also, for regular maintenance or irregular repair of a box element 12 or of the water treatment instrument 14 of the box element 12, the box element 12 can be decoupled from the waste water channel 2 and another box element 12 can be coupled to the waste water channel 2 instead. The coupling and/or decoupling of a box element 12 can be done relatively fast, thereby reducing the down time or reducing the time with less operational capacity of the waste water system 1.

Prior to entering the waste water channel 2, the waste water is transported from the underground sewer system to the supply opening 3 which is usually located above the ground level. The waste water is transport up by means of pumps and/or by means of a screw transporter. The waste water channel 2 is positioned under an angle with the horizontal in an inclined position wherein the supply opening 3 is located higher than the discharge opening 4. Transport of the waste water through the channel 2 can thus be obtained by means of gravity.

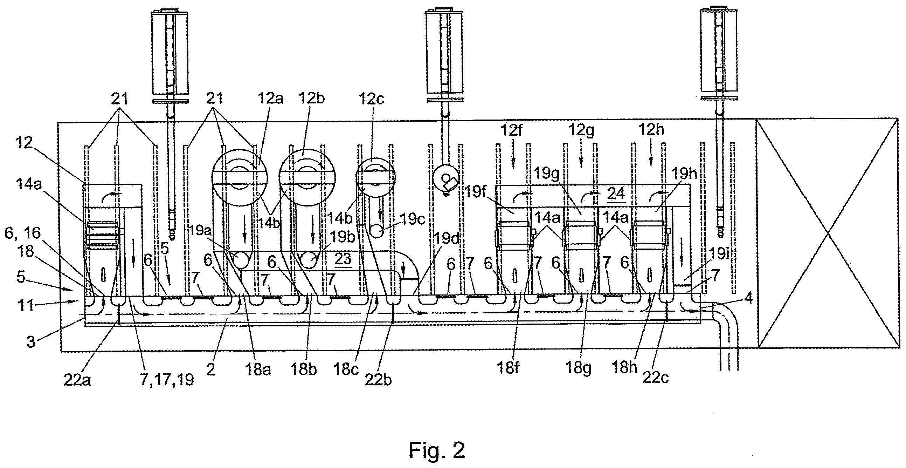

In Figure 2 a second embodiment of a waste water system 1 is shown. In this embodiment, all sets 5 of first and second channel coupling elements 6, 7 are provided at one side 11 of the channel 2. It can be seen that the second fluid passage of the box elements 12 are not always connected to the channel 2 directly. For example, box elements 12a, 12b and 12c each have a first fluid passage 18a, 18b and 18c respectively and each have a second fluid passage 19a, 19b and 19c respectively discharging the treated waste water to a channel 23. The channel 23 finally discharges the treated waste water to the central channel 2. This may be done to increase the treatment capacity of the channel 2, since only a barrier 22c is positioned downstream of the first fluid passage 18c. The waste water enters one of the box elements 12a, 12b, 12c with sand separators 14b via one of the first fluid passages 18a, 18b and 18c. A barrier 22b is provided between passages 18c and 19d to direct waste water to one of the passages 18a, 18b, 18c. The sand separators 14b are arranged in a frame 13, which is however not shown in this schematic Figure 2.

A barrier 22a is provided between passages 18 and 19 to direct, in this embodiment, all of the waste water through the box element 12.

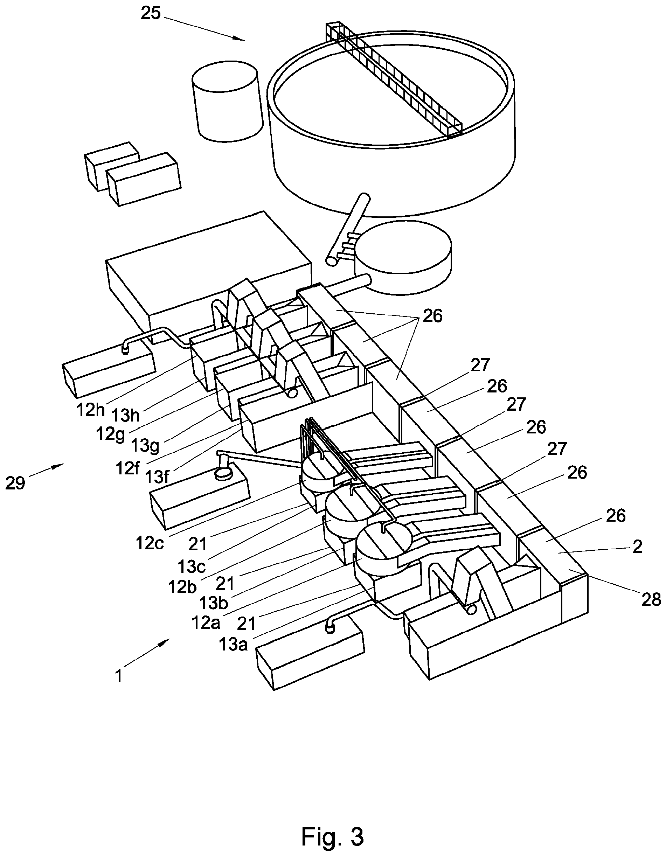

Further, in this embodiment box elements 12f, 12g and 12h containing filters 14a are provided. The box elements 12f, 12g and 12h each have a first fluid passage 18f, 18g and 18h respectively and a second fluid passage 19f, 19g and 19h respectively. The second fluid passage 19f, 19g, 19h discharges the treated waste water to channel 24 having a fluid passage 19i with the channel 2. This configuration may be chosen to increase the treatment capacity to filter the waste water. A barrier 22 is provided downstream of the first fluid passage 18h blocking the channel 2 so all of the waste water in the channel 2 has to enter a box element 12f, 12g or 12h. Downstream of the discharge opening 4 of the channel 2, the partly treated waste water is guided towards the bacterial treatment part 25 of the waste water treatment plant 29, as can be seen in Fig. 3.

The box elements 12a, 12b, 12c each comprise a frame 13a, 13b, 13c which have the same or similar external dimensions. In this embodiment, frame 13c may be somewhat smaller than frames 13a, 13b, but all frames 13a, 13b, 13c are arranged to move over the rails of the guide arrangement 21. Further, the box elements 12f, 12g, 12h have housings 13f, 13g, 13h having the same external dimensions.

The channel 2 is in this embodiment covered by channel cover elements 26 that cover an open channel 2. This can be done when smell nuisance may be present. The channel 2 can then be covered, and, when necessary smell can be removed e.g. by suction.

The channel cover elements 26 have approximately the same length and/or the same shape. Further, they are provided with channel cover connection means 27 to connect the channel cover elements 26 together such that the channel 2 can be fully covered by a channel cover 28. The channel cover elements 26 may rest on the channel walls 10, 11, but other constructions may also be possible. The channel cover elements 26 are preferably manufactured in a factory in a controlled environment and can be made from steel or concrete or any other construction material. Also, the channel 2 itself can be made from channel elements which may have the same or similar dimensions and can be manufactured from steel or concrete or any other construction material. Each channel element is associated with a channel cover element 26 such that upon connecting the channel cover elements 26 together the channel 2 can be completed from the channel elements as well. The channel cover elements 26 and/or the channel elements can then be transported, preferably on a truck, to the site and can on site be connected to each other to form the channel 2 and the channel cover 28.

The channel 2 has an inclined position, which is however not shown here. What can be seen in Figure 3 is that the waste water treatment plant 29 is built above the ground level. Both the channel 2, with its inclined position, as the box elements are arranged above the ground level, which allows more easy construction of the plant and changes to the plant. Also, the bacterial treatment part 25 of the plant 29 is built above the ground level. This can be obtained by providing additional pumping between the 'front train' or waste water treatment system 1 and the 'second train' or the bacterial treatment part 25. This is contrary to the prior art where the waste water treatment plant 29 at least partly extends below the ground level.

Many variants will be apparent to the skilled person in the art. The invention is not limited to the above shown examples. All variants are understood to be comprised within the scope of the invention defined in the following claims.

## Claims

1. System (1) for treatment of waste water comprising a waste water channel (2) provided with a supply opening (3) for receiving a waste water stream and a discharge opening (4) for discharging an at least partly treated waste water stream, wherein the waste water channel (2) is provided with at least a set (5) of a first channel coupling element (6) and a second channel coupling element (7),
further comprising a box element (12) in which at least one waste water treatment instrument (14) is present, wherein the box element (12) is provided with a first box coupling element (16) and a second box coupling element (17) that are arranged for coupling with the first channel coupling element (6) and the second channel coupling element (7) respectively for creating a first fluid passage (18) from the waste water channel (2) to the box element (12) and a second fluid passage (19) allowing to exit waste water from the box element (12) such that at least a part of the waste water stream is guided through the box element (12) to be at least partly in contact with the waste water treatment instrument (14).

2. System according to claim 1, wherein the waste water channel (2) is provided of a further set (5) of a first channel coupling element (6) and a second channel coupling element (7) for coupling with a first box coupling element (16) and a second box coupling element (17) respectively of a further box element (12).

3. System according to claim 1 or 2, wherein sets (5) of first and second channel coupling elements (6, 7) are similar.

4. System according to any one of the preceding claims, wherein the first and second channel coupling elements (6, 7) are adjustable between a closed position in which they substantially close a first opening (8) and a second opening (9) respectively in the waste water channel (2) and an open position in which they substantially open the first and the second opening (8, 9) respectively for allowing a fluid passage.

5. System according to any one of the preceding claims, wherein sets (5) of first and second channel coupling elements (6, 7) are arranged at at least one side (11) of the waste water channel (2).

6. System according to any one of the preceding claims, wherein between a first channel coupling element (6) and a second channel coupling element (7) a barrier (22) is provided to guide at least a part of the waste water stream towards the first channel coupling element (6) when the first fluid passage is realised.

7. System according to claim 6, when the barrier (22) is removable.

8. System according to any one of the preceding claims, wherein the distance (D) between the first channel coupling element (6) and the second channel coupling element (7) is the same for each set of first and second channel coupling elements (6, 7).

9. System according to any one of the preceding claims, wherein the waste water channel (2) is built of segments of approximately the same length.

10. System according to any one of the preceding claims, further comprising a guide arrangement (21) for guiding the box element (12) towards the waste water channel (2).

11. System according to any one of the preceding claims, wherein the box element (12) is transportable over at least the road.

12. Waste water channel (2) having a supply opening (3) for receiving a waste water stream and a discharge opening (4) for discharge at least partly treated waste water, wherein the waste water channel (2) is provided with at least a set (5) of a first channel coupling element (6) and a second channel coupling element (7) that are arranged for coupling with a first box coupling element (16) and a second box coupling element (17) respectively to create a first fluid passage (18) for allowing waste water from the waste water channel (2) towards a box element (12) and a second fluid passage (19) for allowing waste water to exit from the box element (12).

13. Box element (12) for use in a system according to any one of claims 1-11, the box element (12) being a box shaped element or a box in which at least one waste water treatment instrument (14) is arranged, which water treatment instrument (14) itself may not be box shaped and/or may have a specific shape corresponding to its function, the box element (12) comprising a housing (13) in which at least said waste water treatment instrument (14) is arranged, wherein the housing (13) is provided with a first box coupling element (16) and a second box coupling element (17) that are arranged for coupling with a first channel coupling element and a second channel coupling element of a waste water channel (2) of the system to create a first fluid passage (18) for allowing waste water from the waste water channel (2) towards the box element (12) and a second fluid passage (19) for allowing waste water to exit from the box element (12),
wherein the first box coupling element (16) and the second box coupling element (17) are located next to each other and have an intermediate distance that is the same or similar as a distance (D) between the first and second channel coupling elements (6, 7) of the waste water channel (2) of the system such as to facilitate coupling the box element (12) to the set (5) of first and second channel coupling elements (6, 7),
preferably wherein the housing (13) of the box element (12) is dimensioned for road transport.

14. Waste water treatment plant (29) comprising a system according to any one of the claims 1-11.

15. Method for operating a waste water treatment system (1) comprising, providing a waste water treatment channel (2) with a supply opening (3) for receiving a waste water stream and a discharge opening (4) for discharging an at least partly treated waste water stream, wherein the waste water channel (2) is provided with sets (5) of a first channel coupling element (6) and a second channel coupling element (7), coupling at least one box element (12) having a first box coupling element (16) and a second box coupling element (17) to a set (5) of a first channel coupling element (6) and a second channel coupling element (7) such that a first fluid passage (18) is created from the waste water channel (2) to the box element (12) and a second fluid passage (19) is created allowing waste water to exit from the box element (12), wherein during operation of the waste water system (1) a further box element (12) is connected to and/or disconnected from the waste water channel (2).

## Patentansprüche

1. System (1) zur Behandlung von Abwasser, umfassend einen Abwasserkanal (2), versehen mit einer Zuführöffnung (3) zum Aufnehmen eines Abwasserstroms und einer Abführöffnung (4) zum Abführen von einem mindestens teilweise behandelten Abwasserstrom, wobei der Abwasserkanal versehen ist (2) mit mindestens einem Satz (5) eines ersten Kanalkopplungselements (6) und eines zweiten Kanalkopplungselements (7),
ferner umfassend ein Kastenelement (12), in dem mindestens ein Abwasserbehandlungsinstrument (14) vorhanden ist, wobei das Kastenelement (12) versehen ist mit einem ersten Kastenkopplungselement (16) und einem zweiten Kastenkopplungselement (17), die angeordnet sind zum Koppeln mit jeweils dem ersten Kanalkopplungselement (6) und dem zweiten Kanalkopplungselement (7), um einen ersten Flüssigkeitsdurchgang (18) von dem Abwasserkanal (2) zu dem Kastenelement (12) und einen zweiten Flüssigkeitsdurchgang (19), der das Austreten von Abwasser aus dem Kastenelement (12) erlaubt, zu schaffen, sodass mindestens ein Teil des Abwasserstroms durch das Kastenelement (12) geleitet wird, um mindestens teilweise in Kontakt mit dem Abwasserbehandlungsinstrument (14) zu sein.

2. System nach Anspruch 1, wobei der Abwasserkanal (2) ferner versehen ist mit einem weiteren Satz (5) eines ersten Kanalkopplungselements (6) und eines zweiten Kanalkopplungselements (7) zum Koppeln mit jeweils einem ersten Kastenkopplungselement (16) und einem zweiten Kastenkopplungselement (17) eines weiteren Kastenelements (12).

3. System nach Anspruch 1 oder 2, wobei Sätze (5) von ersten und zweiten Kanalkopplungselementen (6, 7) ähnlich sind.

4. System nach einem der vorhergehenden Ansprüche, wobei die ersten und zweiten Kanalkopplungselemente (6, 7) einstellbar sind zwischen jeweils einer geschlossenen Position, in der sie im Wesentlichen eine erste Öffnung (8) und eine zweite Öffnung (9) in dem Abwasserkanal (2) schließen, und einer offenen Position, in der sie im Wesentlichen jeweils die erste und die zweite Öffnung (8, 9) öffnen, um einen Flüssigkeitsdurchgang zu ermöglichen.

5. System nach einem der vorhergehenden Ansprüche, wobei Sätze (5) erster und zweiter Kanalkopplungselemente (6, 7) an mindestens einer Seite (11) des Abwasserkanals (2) angeordnet sind.

6. System nach einem der vorhergehenden Ansprüche, wobei zwischen einem ersten Kanalkopplungselement (6) und einem zweiten Kanalkopplungselement (7) eine Barriere (22) bereitgestellt ist, um mindestens einen Teil des Abwasserstroms zu dem ersten Kanalkopplungselement (6) zu leiten, wenn der erste Flüssigkeitsdurchgang zustande gekommen ist.

7. System nach Anspruch 6, wenn die Barriere (22) entfernt ist.

8. System nach einem der vorhergehenden Ansprüche, wobei der Abstand (D) zwischen dem ersten Kanalkopplungselement (6) und dem zweiten Kanalkopplungselement (7) derselbe ist für jeden Satz von ersten und zweiten Kanalkopplungselementen (6, 7).

9. System nach einem der vorhergehenden Ansprüche, wobei der Abwasserkanal (2) aus Segmenten von ungefähr derselben Länge gebaut ist.

10. System nach einem der vorhergehenden Ansprüche, ferner umfassend eine Leitungsanordnung (21) zum Leiten des Kastenelements (12) zu dem Abwasserkanal (2).

11. System nach einem der vorhergehenden Ansprüche, wobei das Kastenelement (12) über mindestens die Straße transportierbar ist.

12. Abwasserkanal (2) mit einer Zuführöffnung (3) zum Aufnehmen eines Abwasserstroms und einer Abführöffnung (4) zum Abführen von mindestens teilweise behandeltem Abwasser, wobei der Abwasserkanal (2) versehen ist mit mindestens einem Satz (5) eines ersten Kanalkopplungselements (6) und eines zweiten Kanalkopplungselements (7), die angeordnet sind zum Koppeln mit jeweils einem ersten Kastenkopplungselement (16) und einem zweiten Kastenkopplungselement (17) zum Schaffen eines ersten Flüssigkeitsdurchgangs (18), um Abwasser von dem Abwasserkanal (2) zu einem Kastenelement (12) zu lassen, und eines zweiten Flüssigkeitskanals (19), um Abwasser aus dem Kastenelement (12) austreten zu lassen.

13. Kastenelement (12) zur Verwendung in einem System nach einem der Ansprüche 1-11, welches Kastenelement (12) ein kastenförmiges Element ist oder ein Kasten, in dem mindestens ein Abwasserbehandlungsinstrument (14) angeordnet ist, welches Wasserbehandlungsinstrument (14) selbst möglicherweise nicht kastenförmig ist und/oder möglicherweise eine bestimmte Form entsprechend seiner Funktion hat, das Kastenelement (12) umfassend ein Gehäuse (13), in dem mindestens das Abwasserbehandlungsinstrument (14) angeordnet ist, wobei das Gehäuse (13) versehen ist mit einem ersten Kastenkopplungselement (16) und einem zweiten Kastenkopplungselement (17), die angeordnet sind zum Koppeln mit einem ersten Kanalkopplungselement und einem zweiten Kopplungselement eines Abwasserkanals (2) des Systems zum Schaffen eines ersten Flüssigkeitsdurchgangs (18), um Abwasser von dem Abwasserkanal (2) in das Kastenelement (12) eintreten zu lassen, und eines zweiten Flüssigkeitsdurchgangs (19), um Abwasser aus dem Kastenelement (12) austreten zu lassen,
wobei das erste Kastenkopplungselement (16) und das zweite Kastenkopplungselement (17) sich nebeneinander befinden und einen Zwischenabstand haben, der derselbe oder ähnlich ist wie ein Abstand (D) zwischen den ersten und zweiten Kanalkopplungselementen (6, 7) des Abwasserkanals (2) des Systems, um das Koppeln des Kastenelements (12) mit dem Satz (5) von ersten und zweiten Kanalkopplungselementen (6, 7) zu erleichtern,
bevorzugt wobei das Gehäuse (13) des Kastenelements (12) für Straßentransport dimensioniert ist.

14. Abwasserbehandlungsanlage (29), umfassend ein System nach einem der Ansprüche 1-11.

15. Verfahren zum Betreiben eines Abwasserbehandlungssystems (1), umfassend die Bereitstellung eines Abwasserbehandlungskanals (2) mit einer Zuführöffnung (3) zum Aufnehmen eines Abwasserstroms und einer Abführöffnung (4) zum Abführen eines mindestens teilweise behandelten Abwasserstroms, wobei der Abwasserkanal (2) versehen ist mit Sätzen (5) eines ersten Kanalkopplungselements (6) und eines zweiten Kanalkopplungselements (7), koppelnd mindestens ein Kastenelement (12) mit einem ersten Kastenkopplungselement (16) und ein zweites Kastenkopplungselement (17) an einen Satz (5) eines ersten Kanalkopplungselements (6) und eines zweiten Kanalkopplungselements (7), sodass ein erster Flüssigkeitsdurchgang (18) von dem Abwasserkanal (2) zu dem Kastenelement (12) geschaffen wird und ein zweiter Flüssigkeitsdurchgang (19) geschaffen wird, der das Austreten von Abwasser aus dem Kastenelement (12) erlaubt, und wobei während des Betriebs des Abwassersystems (1) ein weiteres Kastenelement (12) mit dem Abwasserkanal (2) verbunden und/oder davon getrennt ist.

## Revendications

1. Système (1) pour traitement d'eaux usées comprenant un canal d'eaux usées (2) muni d'une ouverture d'alimentation (3) pour recevoir un courant d'eaux usées et une ouverture de décharge (4) pour décharger un courant d'eaux usées au moins partiellement traitées, dans lequel le canal d'eaux usées (2) est muni d'au moins un jeu (5) d'un premier élément de couplage de canal (6) et d'un second élément de couplage de canal (7),
comprenant de plus un élément de boîte (12) dans lequel au moins un instrument de traitement d'eaux usées (14) est présent, dans lequel l'élément de boîte (12) est muni d'un premier élément de couplage de boîte (16) et d'un second élément de couplage de boîte (17) qui sont disposés pour un couplage avec le premier élément de couplage de canal (6) et le second élément de couplage de canal (7) respectivement pour créer un premier passage de fluide (18) à partir du canal d'eaux usées (2) vers l'élément de boîte (12) et un second passage de fluide (19) permettant la sortie d'eaux usées à partir de l'élément de boîte (12) de sorte qu'au moins une partie du courant d'eaux usées est guidée à travers l'élément de boîte (12) pour être au moins partiellement en contact avec l'instrument de traitement d'eaux usées (14).

2. Système selon la revendication 1, dans lequel le canal d'eaux usées (2) est muni d'un autre jeu (5) d'un premier élément de couplage de canal (6) et d'un second élément de couplage de canal (7) pour un couplage avec un premier élément de couplage de boîte (16) et un second élément de couplage de boîte (17) respectivement d'un autre élément de boîte (12).

3. Système selon la revendication 1 ou 2, dans lequel des jeux (5) de premier et second éléments de couplage de canal (6, 7) sont similaires.

4. Système selon l'une quelconque des revendications précédentes, dans lequel les premier et second éléments de couplage de canal (6, 7) sont ajustables entre une position fermée dans laquelle ils ferment pratiquement une première ouverture (8) et une seconde ouverture (9) respectivement dans le canal d'eaux usées (2) et une position ouverte dans laquelle ils ouvrent pratiquement la première et la seconde ouverture (8, 9) respectivement pour permettre un passage de fluide.

5. Système selon l'une quelconque des revendications précédentes, dans lequel des jeux (5) de premier et second éléments de couplage de canal (6, 7) sont disposés sur au moins un côté (11) du canal d'eaux usées (2).

6. Système selon l'une quelconque des revendications précédentes, dans lequel entre un premier élément de couplage de canal (6) et un second élément de couplage de canal (7) une barrière (22) est fournie pour guider au moins une partie du courant d'eaux usées vers le premier élément de couplage de canal (6) lorsque le premier passage de fluide est réalisé.

7. Système selon la revendication 6, dans lequel la barrière (22) est détachable.

8. Système selon l'une quelconque des revendications précédentes, dans lequel la distance (D) entre le premier élément de couplage de canal (6) et le second élément de couplage de canal (7) est identique pour chaque jeu de premier et second éléments de couplage de canal (6, 7).

9. Système selon l'une quelconque des revendications précédentes, dans lequel le canal d'eaux usées (2) est constitué de segments d'approximativement la même longueur.

10. Système selon l'une quelconque des revendications précédentes, comprenant de plus un ensemble de guide (21) pour guider l'élément de boîte (12) vers le canal d'eaux usées (2).

11. Système selon l'une quelconque des revendications précédentes, dans lequel l'élément de boîte (12) est transportable sur au moins la route.

12. Canal d'eaux usées (2) ayant une ouverture d'alimentation (3) pour recevoir un courant d'eaux usées et une ouverture de décharge (4) pour la décharge d'eaux usées au moins partiellement traitées, dans lequel le canal d'eaux usées (2) est muni d'au moins un jeu (5) d'un premier élément de couplage de canal (6) et d'un second élément de couplage de canal (7) qui sont disposés pour un couplage avec un premier élément de couplage de boîte (16) et un second élément de couplage de boîte (17) respectivement pour créer un premier passage de fluide (18) pour laisser les eaux usées passer du canal d'eaux usées (2) vers un élément de boîte (12) et un second passage de fluide (19) pour laisser les eaux usées sortir de l'élément de boîte (12).

13. Elément de boîte (12) pour une utilisation dans un système selon l'une quelconque des revendications 1-11, l'élément de boîte (12) étant un élément en forme de boîte ou une boîte dans laquelle au moins un instrument de traitement d'eaux usées (14) est disposé, lequel instrument de traitement d'eaux usées (14) peut-être lui-même dans une forme de boîte et/ou peut présenter une forme spécifique correspondant à sa fonction, l'élément de boîte (12) comprenant un logement (13) dans lequel au moins ledit instrument de traitement d'eaux usées (14) est disposé, dans lequel le logement (13) est muni d'un premier élément de couplage de boîte (16) et d'un second élément de couplage de boîte (17) qui sont disposés pour un couplage avec un premier élément de couplage de canal et un second élément de couplage de canal d'un canal d'eaux usées (2) du système pour créer un premier passage de fluide (18) pour laisser les eaux usées passer du canal d'eaux usées (2) vers l'élément de boîte (12) et un second passage de fluide (19) pour laisser les eaux usées sortir de l'élément de boîte (12),
dans lequel le premier élément de couplage de boîte (16) et le second élément de couplage de boîte (17) sont disposés l'un après l'autre et présentent une distance intermédiaire qui est identique ou similaire comme une distance (D) entre les premier et second éléments de couplage de canal (6, 7) du canal d'eaux usées (2) du système afin de faciliter le couplage de l'élément de boîte (12) au jeu (5) de premier et second éléments de couplage de canal (6, 7),
de préférence dans lequel le logement (13) de l'élément de boîte (12) est dimensionné pour un transport sur route.

14. Usine de traitement d'eaux usées (29) comprenant un système selon l'une quelconque des revendications 1-11.

15. Procédé de fonctionnement d'un système de traitement d'eaux usées (1) comprenant, la fourniture d'un canal de traitement d'eaux usées (2) avec une ouverture d'alimentation (3) pour recevoir un courant d'eaux usées et une ouverture de décharge (4) pour décharger un courant d'eaux usées au moins partiellement traitées, dans lequel le canal d'eaux usées (2) est muni de jeux (5) d'un premier élément de couplage de canal (6) et d'un second élément de couplage de canal (7), le couplage d'au moins un élément de boîte (12) ayant un premier élément de couplage de boîte (16) et un second élément de couplage de boîte (17) à un jeu (5) d'un premier élément de couplage de canal (6) et d'un second élément de couplage de canal (7) de telle sorte qu'un premier passage de fluide (18) est créé à partir du canal d'eaux usées (2) vers l'élément de boîte (12) et un second passage de fluide (19) est créé laissant les eaux usées sortir de l'élément de boîte (12), dans lequel pendant le fonctionnement du système d'eaux usées (1) un autre élément de boîte (12) est connecté à et/ou déconnecté du canal d'eaux usées (2).
